# EUROPEAN PATENT APPLICATION

(11) **EP 4 792 634 A1**
(43) Date of publication of application: **19.08.2026**
(21) Application number: 25157921.5
(22) Date of filing: 14.02.2025
(51) Int. Cl.: A01C 5/04, A01C 11/02, A01C 19/02, A01C 23/00

(54) **AGRICULTURAL MACHINE FOR TRANSPLANTATION AND SEEDING**

(71) Applicant: Checchi e Magli S.r.l., 40054 Budrio BO (IT)
(72) Inventor: LAZZARI, Lorenzo, 40061 MINERBIO (IT)
(74) Representative: Modiano, Micaela Nadia

(57) **Abstract**

An agricultural machine for transplantation and seeding, which comprises at least:
- a supporting chassis (2), configured to be hitched to an agricultural tractor,
- a hopper (3) for containing plant elements intended for seeding or transplantation,
- an assembly (4) for transplantation and seeding, which comprises at least one stator (5) coupled to the chassis (2), a rotor (6), which can rotate with respect to the stator (5), and at least one soil perforator (7), which is supported by the rotor (6) and configured to temporarily retain the plant elements,
- a device (8) for the controlled distribution of the plant elements, which is operatively interposed between the hopper (3) and the assembly (4) and comprises at least one rotating disk (9), the disk (9) being provided with means for retaining the plant elements released by the hopper (3) and being configured for their controlled delivery to a perforator (7),
- a drive unit (11) for the device (8), which is adapted to command the rotation of the disk (9), and
- means (12) for the detection of the rotational speed of the rotor (6) and an electronic unit (13) for control and management of the drive unit (11), which is configured to regulate the rotational speed of the disk (9) based on the information detected by the detection means (12), for the correct release of the plant elements into the perforator (7).

## Description

The present invention relates to an agricultural machine for transplantation and seeding.

Within the vast and heterogeneous category of agricultural machines, transplanters and seeders have been widespread for some time: these are machines designed to be towed over a plot of agricultural land by a tractor and which, during the travel, perforate the soil and release, into the holes obtained, plant elements earmarked for seeding or transplantation (seeds, grains, plugs, or the like), which are in this way distributed at regular intervals along one or more rows parallel to the advancement direction of the tractor.

In more detail, in a general configuration that is now well-established, agricultural machines of this type comprise first of all a chassis, which is fitted with a coupling for hitching to a tractor and which rests on wheels which in turn rest on the ground. The chassis supports a hopper which contains the seeds (or other plant elements earmarked for seeding or transplantation) and at least one main unit, which receives the seeds one by one from the hopper and deposits them in the holes made in the soil, typically at a depth of a few centimeters.

To perform this task, the main unit comprises first of all a rotor which can rotate about a horizontal axis, perpendicular to the advancement direction imposed by the tractor, and a plurality of cup perforators, supported by the rotor and arranged along its periphery, so that an appendage thereof, protruding radially beyond the bulk of the rotor proper, can penetrate the soil during the rotation of the latter, perforating it. Interposed between the hopper and the rotor is a distributor which comprises a disk, which in turn can rotate about an axis parallel to the rotation axis of the rotor. During its rotation, the disk receives the seeds one by one from the hopper and, after temporarily retaining them in various ways while it rotates about its own rotation axis, releases them serially into respective cups of the main unit, so that the latter can introduce them into the soil and thus obtain the seeding or the transplantation.

Such implementation solution is however not devoid of drawbacks.

The rotor that supports the cups is normally driven in rotation by the wheels of the machine, which in turn are not motorized but move because they are towed by the tractor: the rotational speed of the rotor, which determines the frequency with which the seeds are introduced into the soil and the distance between consecutive seeds along the soil, is therefore determined solely by the speed of the tractor. So in order to obtain a uniform distribution of the seeds along the soil, the tractor moves at a constant speed over the soil, and so too does the rotor: the speed at which the disk is made rotate must in turn be constant, so as to ensure the necessary synchronization of the rotations and ensure that at the right moment each cup is at the right point for the disk to deliver a seed.

However, it sometimes happens that the speed of the tractor is not constant, for example when the tractor is started, or when the tractor gets ready to end depositing seeds in one row and needs to move to the side to start a new row. In these and in other cases which can also cause a variation, albeit temporary, of the speed, the synchronization failure that ensues means it is impossible to ensure the correct flow of delivery of one or more seeds (from the disk to the rotor, and therefore to the soil), which then are not introduced into the soil, resulting in irregular distributions or discontinuities along one or more rows.

Some solutions have tried to overcome this problem by motorizing the disk independently, but this appreciably complicates the architecture of the machine, not least because of the need to equip it with numerous sensors and instruments to control the speed of the various components involved.

The aim of the present invention is to solve the above-mentioned problems, by providing an agricultural machine capable of performing the transplantation or seeding of plant elements such as seeds, grains, plugs, or the like, in an optimal manner.

Within this aim, an object of the invention is to provide a machine that ensures a steady flow of delivery and an optimal distribution of the plant elements, even in the event of changes in the speed of the tractor.

Another object of the invention is to provide an agricultural machine that ensures a transplantation or seeding of plant elements in an optimal manner, with a structurally simple solution.

Another object of the invention is to provide an agricultural machine that overcomes the drawbacks of the prior art in a manner different from any existing solutions.

Not least an object of the invention is to provide an agricultural machine that is highly reliable, safe in use, and at low cost.

This aim and these and other objects which will become more apparent hereinafter are achieved by an agricultural machine according to claim 1, optionally provided with one or more of the characteristics of the dependent claims.

Further characteristics and advantages of the invention will become more apparent from the description of a preferred, but not exclusive, embodiment of the agricultural machine according to the invention, which is illustrated by way of non-limiting example in the accompanying drawings wherein:

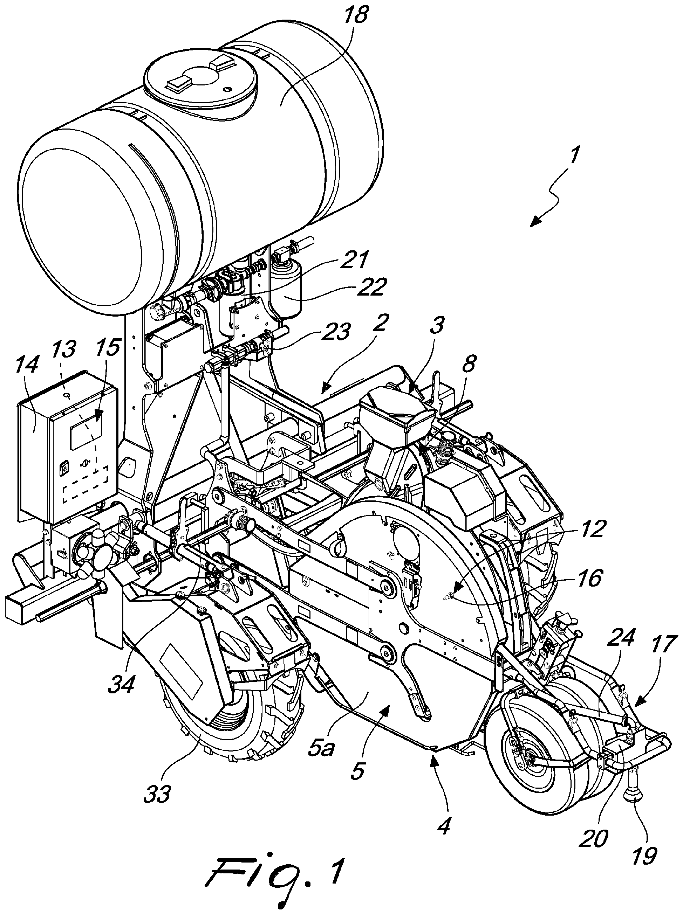

Figure 1 is a perspective view from behind of the agricultural machine according to the invention;

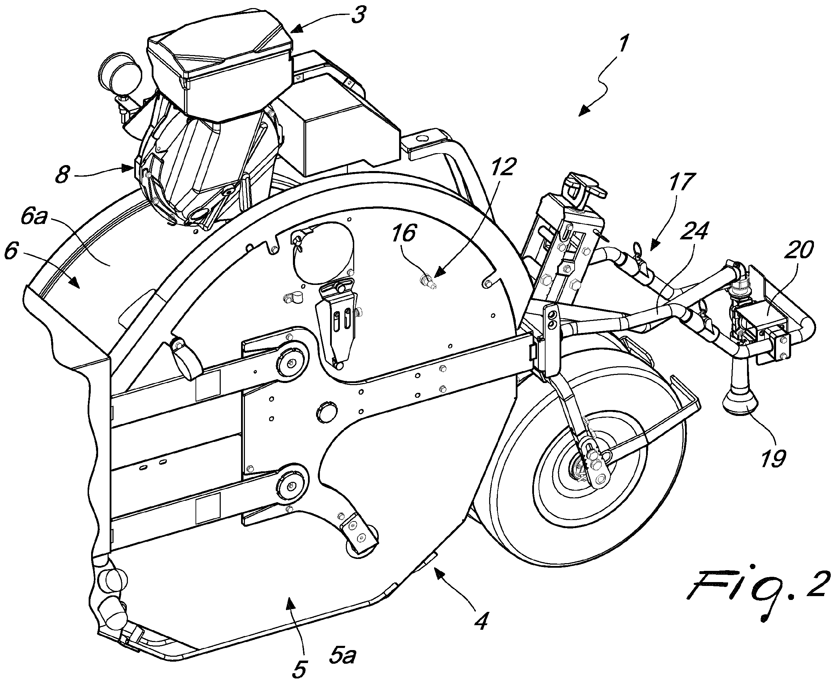

Figure 2 is a perspective view from the front of a part of the agricultural machine of Figure 1;

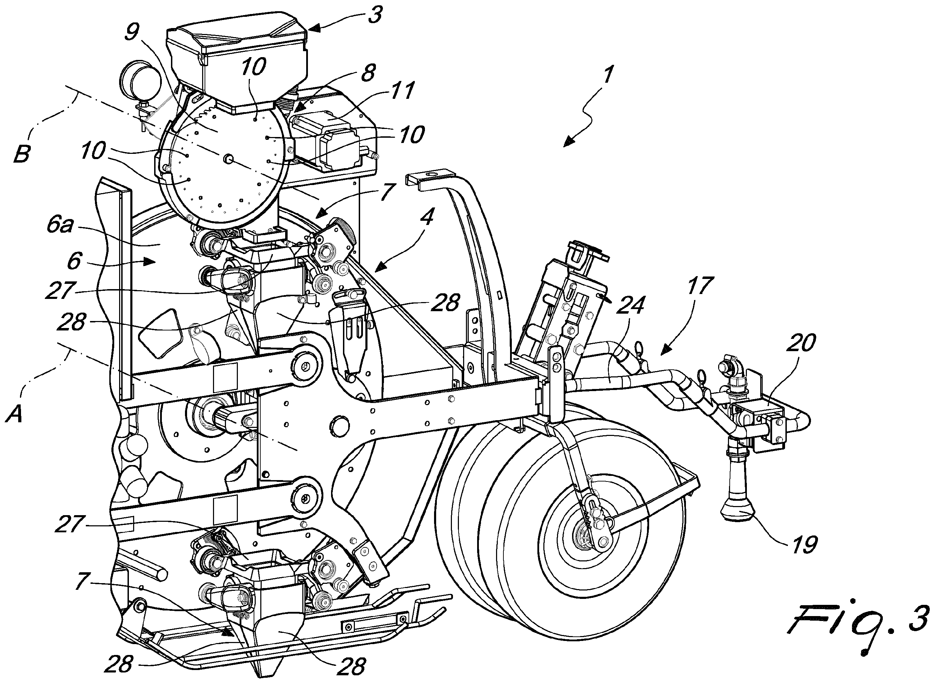

Figure 3 is an additional perspective view from the front of substantially the part of the machine of Figure 2, with some components removed;
Figure 4 is a perspective view from behind of substantially the machine as in Figure 3;
Figure 5 is a perspective view of an improvement component, in a first configuration, adapted to retain plant elements;
Figure 6 is a side view of the improvement component of Figure 5;
Figure 7 is a front elevation view of the improvement component of Figure 5 in a second configuration, adapted to release the plant elements.

With particular reference to the figures, the reference numeral 1 generally designates an agricultural machine for transplantation and seeding.

The machine 1 can be effectively used for seeding or transplantation on any type of soil, optionally even after that soil has been subjected to a mulching treatment; for example, the machine 1 can perform the seeding or transplantation on polymeric films (be they biodegradable or otherwise) or on films of different nature.

As will become clear in the discussion below in fact, the particularities and in particular the functionality of the machine 1 remain unimpaired by changes in the type of soil and/or in the covering film previously applied to it.

The machine 1 comprises first of all at least one supporting chassis 2, configured to be hitched to an agricultural tractor (which can be conventional, and which partly for this reason is not shown in the accompanying figures).

By virtue of the hitching, the chassis 2 and the machine 1 in general can be towed over the soil and during the advancement they can perform the transplantation and seeding, according to the methods that will be explained below.

In this context, the tractor (and/or the operator driving it) can move back and forth over the soil along straight and mutually parallel paths, so as to perform the seeding or the transplantation in parallel rows. Obviously, in the presence of one or more mulching films, these can dictate the path of the tractor (and of the machine 1).

To enable the hitching to the tractor, the chassis 2 can be provided with any component or apparatus that is commonly used in the sector for this purpose; for example, the chassis 2 can comprise a three-point coupling.

Preferably, the chassis 2 is of the modular and reinforced type and can be provided with different types of three-point couplings and various reinforcement elements or structures.

Furthermore, the machine 1 comprises at least one hopper 3 for containing plant elements intended for seeding or transplantation, such as seeds, grains, plugs (of compressed turf for example), partially germinated seedlings, or the like. The hopper 3 is directly or indirectly coupled to the chassis 2. In the present relationship, "indirect" coupling means that at least one additional element is interposed between the two cited elements.

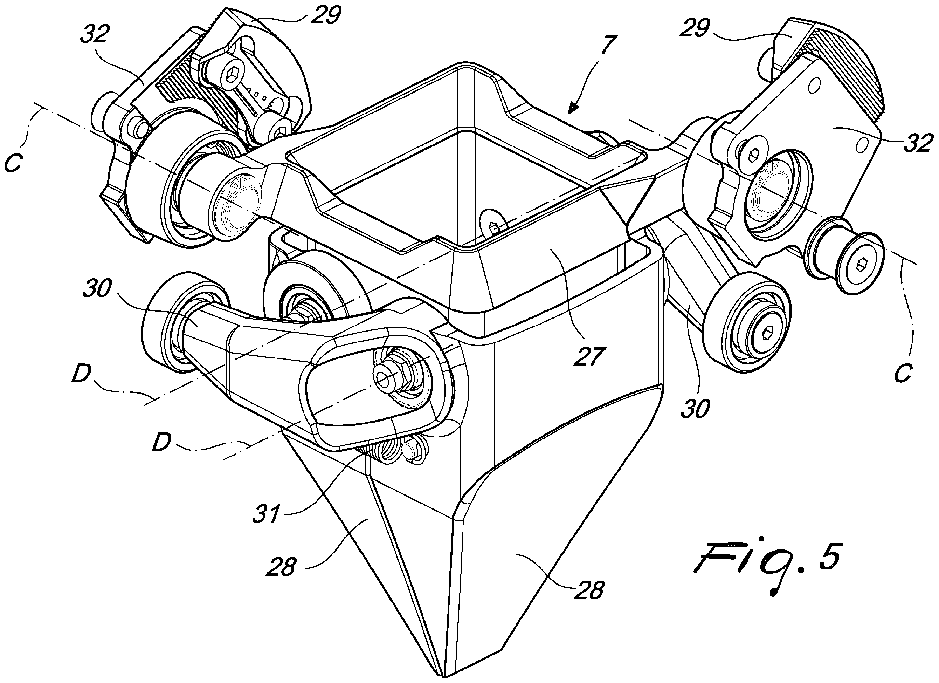

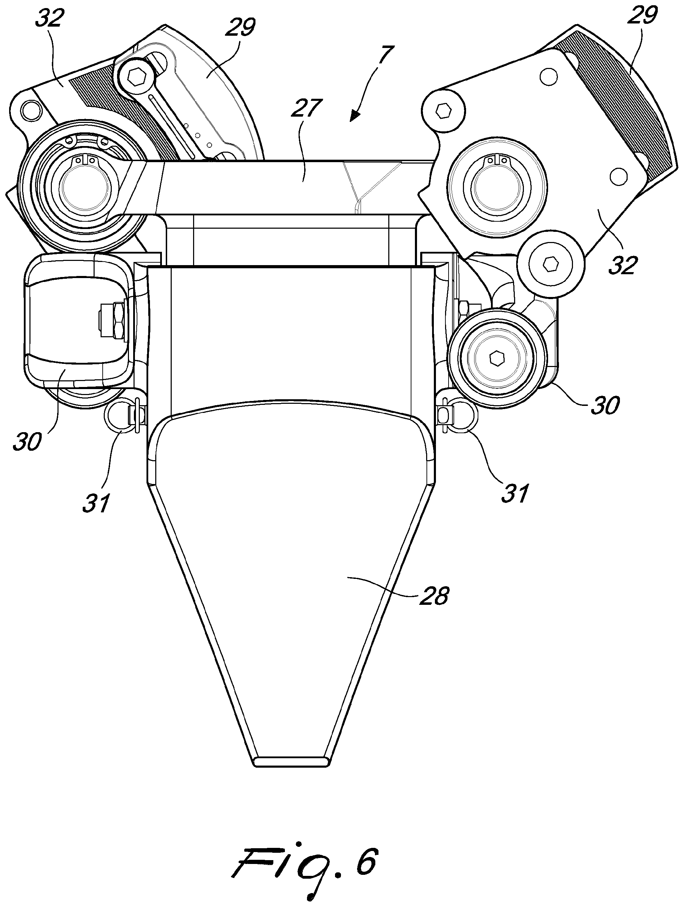

Furthermore, the machine 1 comprises at least one assembly 4 for transplantation and seeding, which in turn comprises at least one stator 5 coupled (directly or indirectly) to the chassis 2, a rotor 6, which can rotate with respect to the stator 5 (and with the chassis 2) about a main axis A, and at least one soil perforator 7 (Figures 5-7), which is supported by the rotor 6 and configured to temporarily retain the plant elements (and to release them into the soil).

It should be noted that the machine 1 can have a number at will of hoppers 3 and/or assemblies 4 for transplantation and seeding, preferably side-by-side transversely to the advancement direction imposed on the tractor. In order to be capable of supporting a possibly high number of assemblies 4 (and/or other components which will be described below), as mentioned above the chassis 2 can be suitably reinforced.

The rotor 6 can support a single perforator 7 but preferably supports a larger number of them: while the machine 1 advances over the soil, the rotation of the rotor 6 enables each perforator 7 to intercept and perforate the soil, making a hole in it into which a plant element is inserted, thus obtaining the seeding and transplantation. In this context therefore, the number of perforators 7 with which the rotor 6 is provided determines the frequency of transplantation or seeding and/or the number of plant elements transplanted or seeded per unit of length traveled (or per complete rotations of the rotor 6 about the main axis A).

What is said below regarding one perforator 7 should therefore be understood as also applying to any desired number of perforators 7.

The perforator 7 is preferably arranged in a peripheral region of the rotor 6 (close to the edge) and protrudes radially from the bulk thereof with at least one portion thereof, which can cyclically be introduced into and perforate the soil during the advancement of the tractor and the rotation of the rotor 6.

The main axis A is typically horizontal and perpendicular to the advancement direction imposed by the tractor. Note that although the tractor typically is not part of the machine 1, the advancement direction is defined solely by the coupling methods imposed by the three-point coupling or in any case by the shape and configuration of the chassis 2 and of the components employed for the coupling with the tractor.

In the preferred embodiment, while not limiting of the scope of protection claimed herein, the rotor 6 comprises two disk-like bodies 6a of identical size, which coaxially face each other; the perforators 7 are interposed between them and are supported by both. In such solution the stator 5 is a form of shell integral with the chassis 2 and in turn comprises two disk-shaped covering walls 5a, which face the bodies 6a in parallel.

Furthermore, the machine 1 comprises at least one device 8 for the controlled distribution of the plant elements, which is operatively interposed between the hopper 3 and the assembly 4 and comprises at least one disk 9 which rotates about an auxiliary axis B (typically parallel to the main axis A). The disk 9 is provided with means for retaining the plant elements released by the hopper 3 and is configured for their controlled delivery to a perforator 7.

The function of the device 8 is to measure and rationalize the delivery of plant elements to the perforators 7, so that each one of them seeds or transplants, at each hole made in the soil, a dose composed of a predefined number of plant elements. Typically this number is equal to one, but it could also be greater (for example equal to two), if the plant elements are constituted by very small seeds, or for other specific requirements. In this precise context, it should be understood that the device 8 is "operatively" (as well as, typically, "physically") interposed between the hopper 3 and the assembly 4: it is arranged between them in the movement of the plant elements from the hopper 3 to the soil.

To perform its function therefore, the disk 9 comprises retention means of various kinds, which are in any case configured to retain one by one the doses of plant elements with a uniform distribution along its peripheral region. For example, the disks 9 have orifices 10 provided along an outer annulus which is ideally identified on one of the faces of the disk 9: these orifices 10 are placed in communication with a pneumatic depression generation unit, to use suction to retain the plant elements released by the hopper 3 until such time, following a rotation of the disk 9, as they are facing a perforator 7, into which they are released according to various methods. For example, the release can occur by virtue of a conveniently arranged mechanical obstacle, arranged along the trajectory imposed on the plant elements by the disk 9, which therefore causes their detachment from the orifices 10, with consequent fall by gravity into the perforator 7.

However, the possibility is not ruled out of resorting to other retention means and to different methods of release into the perforators 7, while remaining within the scope of protection claimed herein.

Evidently, in order to allow the operation described above, the disk 9 is arranged proximate to (below) the hopper 3 and on the opposite side it surmounts the rotor 6. The disk 9 can be supported by the assembly 4 (and therefore, indirectly, by the chassis 2).

Furthermore, the machine 1 comprises at least one drive unit 11 for the device 8, which is adapted to command the rotation of the disk 9 about the auxiliary axis B. For example, the drive unit 11 can comprise an electric motor, preferably associated with a dedicated controller, mechanically connected to the disk 9 by means of a chain.

The rotation of the disk 9 must occur in synchronization with the rotation of the rotor 6, which means that at the moment the retention means release the plant elements, a perforator 7 must be ready to receive them.

In any case, up to this point (and for all aspects not addressed in the present discussion) the machine 1 can be conventional. In particular therefore, the person skilled in the art can choose in each instance the fitting and the embodiment of the chassis 2 (and how it is hitched to the tractor), of the hopper 3, of the assembly 4, of the device 8, etc., based on the common general knowledge of the sector and according to the specific requirements, while remaining within the scope of protection claimed herein.

According to the invention, the machine 1 comprises means 12 for the detection of the (typically angular) rotational speed of the rotor 6 (about the main axis A) and an electronic unit 13 for control and management at least of the drive unit 11.

The electronic unit 13 is shown only schematically in the accompanying figures, inside a protective cabinet 14 preferably provided with a control interface 15, but it can be of conventional type, and for example it can comprise or be constituted by a controller, a PLC, a computer, another form of hardware, reprogrammable or otherwise (for example with a microprocessor). It can also be arranged elsewhere (for example in the controller associated with the drive unit 11).

It should be noted that all the functionalities described here for the electronic unit 13 in practice can be executed using software and/or hardware components that the person skilled in the art is capable of selecting, drawing on common knowledge of the sector.

According to the invention, the electronic unit 13 is configured at least to regulate the rotation speed of the disk 9 (to this end controlling the drive unit 11 using the controller of the latter or in another manner), based on the information detected by the detection means 12, to ensure the correct release of the plant elements into each perforator 7.

As anticipated, the rotation of the disk 9 and the rotation of the rotor 6 must be synchronized so as to enable the handover of each plant element (or each dose of plant elements) to a perforator 7, by the device 8. The choice to control the rotational speed of the disk 9 via the electronic unit 13, based on the speed of the rotor 6, ensures this synchronization in an entirely special and innovative manner and achieves the set aim from this point onward. In fact, also as a consequence of any variations in the speed of the rotor 6, the synchronization is still ensured by the electronic unit 13, which promptly adjusts the rotational speed of the disk 9, so as to ensure the correct handling of each plant element and therefore the optimal transplantation or seeding of the plant elements.

In the preferred embodiment, while not limiting of the scope of protection claimed herein, the detection means 12 comprise at least one proximity sensor 16, which is supported by the stator 5 (by one of the disk-shaped walls 5a) and is configured to detect the presence of a perforator 7 in a predefined area, corresponding to a portion of the path followed by each perforator 7 during the rotation of the rotor 6 about the main axis A. The proximity sensor 16 can be of the inductive type, but different choices are not ruled out.

More specifically, the electronic unit 13 can be provided with instructions for calculating the speed of the rotor 6 based on the time interval elapsed from the moment of entry of the perforator 7 into the predefined area to the moment of exit of the perforator 7 from this predefined area; these moments are indeed detected by virtue of the proximity sensor 16. So in other words, if we observe that the field of action of the proximity sensor 16 (the predefined area), in which the latter is capable of detecting the presence or absence of the perforator 7, has an area such that it requires the perforator 7 to rotate for a certain time in order to cross it completely, the solution proposed above makes it possible to measure this time and extract the (angular) rotational speed, the length of the circular arc ideally traveled (or the amplitude of the angle swept) in the meantime obviously being known.

It is emphasized in any case that any method of detection of the speed of the rotor 6 and the adoption of any instrument adapted to this end, even if conventional, is understood to be included in the scope of protection claimed herein.

Usefully, the machine 1 comprises at least one sprinkling system 17, which is configured to dispense at least one jet of fluid (typically but not necessarily water) directed toward the plant element (just) released into the soil by the perforator 7 (or by each perforator 7).

Advantageously, the electronic unit 13 for control and management can be configured to manage the activation of the sprinkling system 17, in particular, as a function of the information detected by the detection means 13 or in any case so as to coordinate the dispensing of the jets of fluid with the release of the plant elements into the soil. Thus, even in the presence of changes of speed in the rotation of the rotor 6, the electronic unit 13 is still capable of activating the system 17 at the appropriate time, for example by setting a delay of a preset time between the moment each plant element is released by the perforator 7 and the moment the system 17 is actuated.

In particular therefore, the system 17 can comprise a tank 18 for containing the water or in any case the chosen fluid, which is supported (directly or indirectly) by the chassis 2 and which is placed in communication with a circuit that can be passed through by the fluid, which leads, on the opposite side with respect to the tank 18, to a dispenser 19 directed downward and arranged behind, after the assembly 4. The meaning of the term "behind" is with respect to the advancement direction imposed by the tractor. In this manner, by choosing a suitable delay in actuating the system 17, the invention ensures that the jet strikes the plant element a few moments after the latter has been seeded or transplanted into the soil.

To ensure optimal handling of the plant element, the dispenser 19 can be contoured so as to produce a circular jet that encompasses the plant element proper.

Even more specifically, the circuit can be intercepted by a solenoid valve 20, preferably controlled by the electronic unit 13 (in order to enable the system 17 to be managed by the latter). The solenoid valve 20 can regulate the egress of the fluid from the dispenser 19.

More specifically, but not necessarily, the circuit can comprise (in addition to conveniently-chosen pipe connectors) at least one component chosen from among a pump 21 (preferably fitted with its own controller), an expansion vessel 22, a faucet 23 (for example a butterfly valve), and a manifold (and preferably it comprises all of them).

The pump 21 draws the fluid from the tank 18 and has the task of keeping the amount of fluid in the expansion vessel 22 constant, at an established pressure.

It is thus possible to provide the desired average amount of fluid (preferably high, and in any case adjustable using the faucet 23) to each plant element released. In particular, through the circuit (which can comprise a tube 24 supported directly or indirectly by the assembly 4) the pressurized fluid reaches the solenoid valve 20, which regulates its egress. In addition, the pump 21 is fitted with a controller that is capable of dealing with all the hazardous conditions that could damage it, such as lack of fluid, a dirty filter, or overheating owing to improper use. In these cases the controller can contain instructions to emit an alarm signal and stop the pump 21, preventing damage to it.

Advantageously, the machine 1 can comprise at least one apparatus 25 for dispensing compressed air, which is configured to direct a puff of compressed air toward a plant element (or dose) retained by a respective perforator 7, in order to facilitate the transplantation or seeding of that plant element.

The puff of compressed air makes it possible to facilitate the egress of the plant element retained by the perforator 7 and is found to be useful in particular when the plant element already has a developed foliage, which otherwise could be an obstacle to its release into the soil.

Advantageously, the electronic unit 13 for control and management can be configured to manage the activation of the apparatus 25; in particular, the management occurs as a function of the information detected by the detection means 12 or in any case so as to coordinate the dispensing of the puffs of compressed air with the release of the plant elements into the soil. Thus, even in the presence of changes of speed in the rotation of the rotor 6, the electronic unit 13 is still capable of activating the apparatus 25 at the appropriate time.

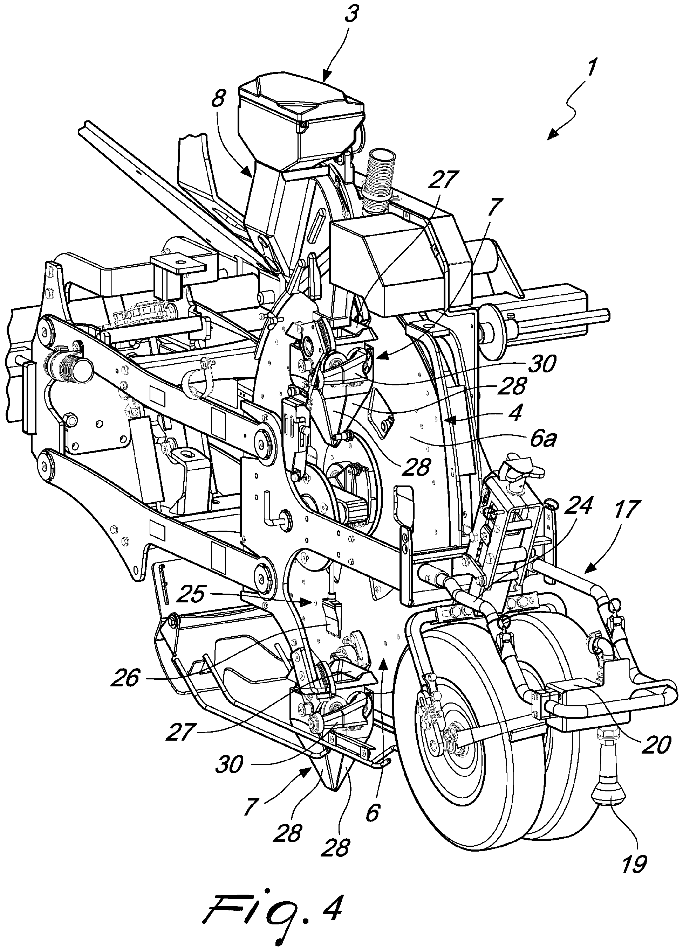

In particular, in the preferred embodiment, illustrated in the accompanying figures for the purposes of non-limiting example of the invention, the apparatus 25 comprises a comb 26 (Figure 4) directed downward, substantially toward the position assumed by the perforator 7 to the moment of transplantation or of seeding of the plant element. This position effectively corresponds to the position in which it is lower down, during the rotation about the main axis A.

In more detail, the apparatus 25 also comprises at least one compressor fixed (directly or indirectly) to the chassis 2, driven by the power take-off of the tractor; the electronic unit 13 can activate the apparatus 25 by acting for example on an additional, pneumatic solenoid valve, supported (directly or indirectly) by the assembly 4.

Basically, the perforator 7 (or each perforator 7) can be provided in any manner, as long as it is capable of perforating the soil and of temporarily retaining a dose of plant elements (during the rotation between the position in which it receives the dose from the device 8 and the position in which it performs the transplantation or seeding, in so doing perforating the soil). The embodiment of the perforator 7 that will be illustrated in the following paragraphs (and in the accompanying figures), of significant practical interest, should not therefore be understood as limiting of the scope of protection claimed herein.

In particular, the perforator 7 can comprise a base 27 supported so that it can rotate by the rotor 6; in more detail, the base 27 can be supported so that it can rotate by both the disk-like bodies 6a and it can rotate with respect to these about respective complementary axes C (which are identified for the sake of simplicity only in Figure 4), parallel to the main axis A. By virtue of the capacity for rotation, the base 27 and the perforator 7 in general keep its orientation constant, when the rotor 6 rotates about the main axis A.

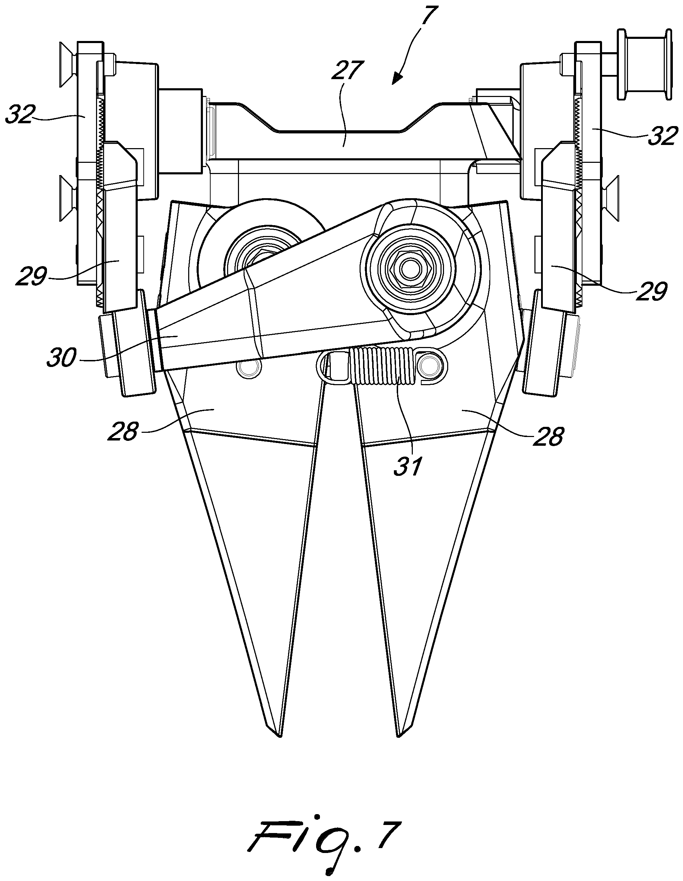

Furthermore, the perforator 7 can comprise two half-shells 28, each of which can rotate with respect to the base 27 (about additional axes D which are parallel to the bodies 6a), between a first configuration, in which the lower edges of the half-shells 28 are placed (or pressed) against each other to define a spout closed in a lower region (Figure 5), for containing at least one plant element (or a dose), and a second configuration, in which the edges are mutually spaced apart for the release of the plant element (or of the dose) (Figure 7). In the first configuration, the spout has a shape such that it can penetrate into the soil and in so doing make a hole of adequate depth; immediately after having made the hole (or while it is penetrating into the soil), the half-shells 28 are moved to the second configuration in order to enable the release into the hole, and into the soil, of the plant element or of the dose of plant elements.

Even more specifically, the machine 1 can comprise means of regulation of the rotation stroke limit (about the additional axes D) of the half-shells 28, in particular in order to vary the arrangement assumed by the half-shells 28 in the second configuration. In other words, it is possible for the second configuration to correspond to a stroke limit for the rotation of the half-shells 28 (at the other extreme, evidently the stroke ends when the edges of the half-shells 28 come into contact with each other, in the first configuration) and the means of regulation, by modifying the stroke limit, vary the mutual distance between the edges of the half-shells 28 (or the angle of aperture of them), so as to offer a larger or smaller opening to release the plant elements.

This variation makes it possible to obtain holes of greater or lesser width, depending on the requirements; for example, one can choose to make a hole of minimum dimensions, when the transplantation or seeding for the planting of the seedling or of the seed needs to be performed on a mulching film.

More specifically, with further reference to the embodiment in the accompanying figures (see in particular Figures 5-7), which is of significant practical interest but not limiting of the invention, the means of regulation comprise first of all two cams 29 which are coupled to the rotor 6 (to respective bodies 6a) and are configured for the guided movement of respective rods 30 which are integral with corresponding half-shells 28, in order to command the transition from the first configuration to the second configuration. More precisely, during the rotation of the rotor 6 and therefore of the perforators 7 about the main axis A, the rods 30, initially spaced apart from the cams 29 (as in Figure 5), progressively approach them until they come into contact with them; as the rotation of the rotor 6 proceeds, the cams 29 move the rods 30 and therefore the half-shells 28 from the first to the second configuration.

Once the second configuration is reached, by virtue of the further rotation of the rotor 6, the cams 29 move away from the rods 30 and the movement to return to the first configuration can be ensured by an elastic coupling, for example obtained with springs 31.

The means of regulation can therefore comprise two plates 32 rigidly coupled to the rotor 6 and having, on their surface, a knurling with parallel lines (a ribbed machining), which is adapted to be coupled by clamping with respective knurled surfaces of the cams 29 according to a plurality of relative arrangements, corresponding to different relative positions of these cams 29 with respect to the rods 30 and to the half-shells 28. Thus, it is possible to modify the stroke limit for the second configuration.

Usefully, the machine 1 can comprise a pair of main wheels 33 (with dimensions chosen as a function of the weight of the machine 1), for resting on the ground, which are coupled so that they can rotate to the chassis 2 and which are free to rotate following the advancement of the chassis 2 towed by the tractor. At least one of these main wheels 33 is connected to the rotor 6 (by means of adapted transmission components), in order to obtain the rotary entrainment of the rotor 6 by virtue of the advancement of the chassis 2, towed by the tractor, over the ground. In other words, preferably the machine 1 is not fitted with drive units for the main wheels 33 and the rotor 6: it advances over the ground simply because it is towed by the tractor and the consequent rotational movement of the main wheels 33 is transmitted to the rotor 6. The main wheels 33 can be adjustable in height, so as to ensure an optimal alignment with the assembly 4 and a perfect adherence on the ground. Moreover, the main wheels 33 resting on the ground support the weight of the machine 1 and this ensures an excellent grip on the ground and prevents any slippage. In turn, the assembly 4 can be mounted on a sprung parallelogram that enables it to be used on terrains that are more or less yielding, compensating for the weight of the operator where present (in the case of transplantation, for example).

More specifically, the machine 1 can comprise a bar 34 (for example hexagonal) which connects a torque limiter, with which the assembly 4 is fitted, to the main wheels 33. By way of a chain, motion is transmitted to the rotor 6, which turns with a rotational ratio that is perfectly synchronized with the advancement speed of the tractor.

In any case the scope of protection claimed herein covers embodiments of the machine 1 in which the wheels 33 and/or the rotor 6 are motorized.

The operation of the machine 1 has effectively already been explained in the foregoing pages, but a brief summary is given below.

The machine 1 can be towed over the soil of interest by a tractor, and during the advancement the rotor 6 that supports the perforators 7 is caused to rotate (preferably, by virtue of the connection of the rotor 6 with the main wheels 33). The device 8 is interposed between the hopper 3, containing seeds, plugs or other plant elements earmarked for seeding or transplantation, and the rotor 6, and comprises the disk 9 driven by the drive unit 11 (which can be powered for example by an electrical switchboard mounted on board the machine 1). The disk 9 is capable of temporarily retaining (for example by suction) the doses of plant elements one by one, while it rotates about its own auxiliary axis B, so moving each dose from the position in which it is received from the hopper 3 to the position in which it is delivered to a perforator 7.

The drive unit 11 is controlled by the electronic unit 13, so as to obtain an optimal synchronization of the disk 9 with the rotor 6, by virtue of the fact that the information about the rotational speed of the latter is supplied to the electronic unit 13 (for example by the proximity sensor 16).

Thus, with the passing of each perforator 7, the drive unit 11 can actuate the disk 9, making it rotate appropriately, in order to obtain at the right moment the release of the dose of plant element into that perforator 7.

The electronic unit 13 can be provided with instructions for conveniently calculating the times and rotational speed to apply to the disk 9 as a function of the speeds in play, even instructing the release of the plant element in advance, if necessary, with respect to the arrival of the perforator 7 (if the speeds in play are very high and in light of the fact that preferably the release occurs by simple gravity).

Subsequently, the perforator 7 rotates about the main axis A until it arrives proximately to the ground and perforates it, in order to release into the hole thus created the plant element (for example by virtue of the transition of the half-shells 28 from the first to the second configuration).

In this context, the electronic unit 13 not only makes it possible to obtain an optimal synchronization between the disk 9 and the rotor 6; it also makes it possible to centralize in it the management of the sprinkling system 17 and of the compressed air dispensing apparatus 25; the information received from the means 12 (from the proximity sensor 16 for example) is processed very rapidly (in a few milliseconds) and the electronic unit 13 uses that information to continuously calculate the correct advance/delay with which to actuate the disk 9, and the dispensing of the jet of fluid (by the system 17) or of the puff of air (by the apparatus 25). Thus, the machine 1 can easily adjust to any variation in the advancement speed of the tractor.

Through the interface 15 (a touch-screen monitor for example) the operator can also manage/set various parameters and settings such as for example:
- the type of activity (seeding or transplantation) and the type of assembly 4 that is mounted as a consequence,
- the number of perforators 7 currently supported by the assembly 4 (because this number can be varied by attaching or removing one or more perforators 7),
- the number of plant elements in each dose (typically one or two),
- the amount of advance/delay when determining the exact moment of release of the plant element, of dispensing of the jet of fluid and/or of the puff of air.

In practice it has been found that the machine 1 according to the invention fully achieves the set aim and objects, in that, by virtue of the electronic unit 13 which detects the rotational speed of the rotor 6, it is capable of synchronizing the rotation of the disk 9 with it, so as to perform the transplantation or seeding of plant elements such as seeds, grains, plugs, or the like, in an optimal manner, even in the event of variations in speed of the tractor.

This objective is obtained with a solution that is structurally simple, in which in order to operate correctly the electronic unit 13 can avail of the proximity sensor 16 alone.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An agricultural machine for transplantation and seeding, which comprises at least:
- a supporting chassis (2), configured to be hitched to an agricultural tractor,
- a hopper (3) for containing plant elements intended for seeding or transplantation, such as seeds, grains, plugs, partially germinated seedlings,
- an assembly (4) for transplantation and seeding, which comprises at least one stator (5) coupled to said chassis (2), a rotor (6), which can rotate with respect to said stator (5) about a main axis (A), and at least one soil perforator (7), which is supported by said rotor (6) and configured to temporarily retain the plant elements,
- a device (8) for the controlled distribution of the plant elements, which is operatively interposed between said hopper (3) and said assembly (4) and comprises at least one disk (9) which rotates about an auxiliary axis (B), said disk (9) being provided with means for retaining the plant elements released by said hopper (3) and being configured for their controlled delivery to said at least one perforator (7),
- a drive unit (11) for said device (8), which is adapted to command the rotation of said disk (9) about said auxiliary axis (B),
**characterized in that** it comprises means (12) for the detection of the rotational speed of said rotor (6) and an electronic unit (13) for control and management at least of said drive unit (11), said electronic unit (13) being configured at least for regulating the rotational speed of said disk (9) based on the information detected by said detection means (12), for the correct release of the plant elements into said at least one perforator (7).

2. The agricultural machine according to claim 1, **characterized in that** said detection means (12) comprise at least one proximity sensor (16), supported by said stator (5) and configured to detect the presence of said at least one perforator (7) in a predefined area, corresponding to a portion of the path traveled by said at least one perforator (7) during the rotation of said rotor (6) about said main axis (A).

3. The agricultural machine according to claim 2, **characterized in that** said electronic unit (13) is provided with instructions for calculating the speed of said rotor (6) based on the time interval elapsed from the moment of entry of said at least one perforator (7) into said predefined area to the moment of exit of said at least one perforator (7) from said predefined area.

4. The agricultural machine according to one or more of the preceding claims, **characterized in that** it comprises at least one sprinkling system (17), which is configured to deliver at least one jet of fluid directed toward the plant element released into the soil by said at least one perforator (7).

5. The agricultural machine according to claim 4, **characterized in that** said electronic unit (13) for control and management is configured to activate said sprinkling system (17).

6. The agricultural machine according to claim 4 or 5, **characterized in that** said sprinkling system (17) comprises a fluid containment tank (18), supported by said chassis (2) and placed in communication with a circuit that can be passed through by the fluid, which leads, on the opposite side with respect to said tank (18), to a dispenser (19) directed downward and arranged behind, after said assembly (4).

7. The agricultural machine according to claims 5 and 6, **characterized in that** said circuit is intercepted by a solenoid valve (20) which is preferably controlled by said electronic unit (13) for control and management.

8. The agricultural machine according to claim 6 or 7, **characterized in that** said circuit comprises at least one component chosen from among a pump (21), an expansion vessel (22), a faucet (23) and a manifold.

9. The agricultural machine according to one or more of the preceding claims, **characterized in that** it comprises at least one apparatus (25) for dispensing compressed air, which is configured to direct a puff of compressed air toward a plant element retained by a respective said perforator (7), in order to facilitate the transplantation or the seeding.

10. The agricultural machine according to claim 9, **characterized in that** said electronic unit (13) for control and management is configured to activate said apparatus (25).

11. The agricultural machine according to claim 9 or 10, **characterized in that** said apparatus (25) comprises a comb (26) directed downward, substantially toward the position assumed by said at least one perforator (7) at the moment of transplantation or of seeding of the plant element.

12. The agricultural machine according to one or more of the preceding claims, **characterized in that** said at least one perforator (7) comprises a base (27) supported so that it can rotate by said rotor (6) and two half-shells (28), which can rotate with respect to said base (27) between a first configuration, in which the lower edges of said half-shells (28) are placed against each other to define a spout closed in a lower region, for containing at least one plant element, and a second configuration, in which said edges are mutually spaced apart for the release of the plant element.

13. The agricultural machine according to claim 12, **characterized in that** it comprises means of regulation of the rotation stroke limit of said half-shells (28), in order to vary the arrangement assumed by said half-shells (28) in said second configuration.

14. The agricultural machine according to claim 13, **characterized in that** said means of regulation comprise:
- two cams (29) coupled to said rotor (6) and configured for the guided movement of respective rods (30) which are integral with corresponding half-shells (28), in order to command the transition from said first configuration to said second configuration,
- two plates (32) rigidly coupled to said rotor (6) and having, on their surface, a knurling with parallel lines which is adapted to be coupled by clamping with respective knurled surfaces of said cams (29) according to a plurality of relative arrangements, corresponding to different relative positions of said cams (29) with respect to said rods (30) and said half-shells (28).

15. The agricultural machine according to one or more of the preceding claims, **characterized in that** it comprises a pair of main wheels (33), for resting on the ground, which are coupled so that they can rotate to said chassis (2) and are free to rotate following the advancement of said chassis (2) towed by a tractor, at least one of said wheels (33) being connected to said rotor (6) in order to entrain said rotor (6) in rotation as a result of the advancement of said chassis (2), towed by the tractor, over the ground.
